(19) Europäisches Patentamt
European Patent Office
Office européen des brevets

(11) **EP 4 503 767 A1**

(12) **EUROPEAN PATENT APPLICATION**
published in accordance with Art. 153(4) EPC

(43) Date of publication:
**05.02.2025 Bulletin 2025/06**

(21) Application number: **23773953.7**

(22) Date of filing: **23.03.2023**

(51) International Patent Classification (IPC):
**H04W 52/14** (2009.01)

(52) Cooperative Patent Classification (CPC):
**H04L 5/00; H04W 52/14; H04W 52/18;
H04W 72/044; H04W 72/231**

(86) International application number:
**PCT/CN2023/083351**

(87) International publication number:
**WO 2023/179707 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.03.2022 CN 202210307017**

(71) Applicant: **VIVO MOBILE COMMUNICATION CO.,
LTD.
Dongguan, Guangdong 523863 (CN)**

(72) Inventors:
• **SUN, Rongrong**
  **Dongguan, Guangdong 523863 (CN)**
• **SUN, Peng**
  **Dongguan, Guangdong 523863 (CN)**
• **LIU, Hao**
  **Dongguan, Guangdong 523863 (CN)**
• **TAMRAKAR, Rakesh**
  **Dongguan, Guangdong 523863 (CN)**

(74) Representative: **Lavoix
Bayerstraße 83
80335 München (DE)**

(54) **POWER CONTROL METHOD AND APPARATUS, AND TERMINAL**

(57)    This application discloses a power control method and apparatus, and a terminal, and relates to the field of communication technologies. The power control method according to embodiments of this application includes: receiving, by a terminal, first signaling sent by a network-side device; determining, by the terminal, at least two pieces of beam information for uplink transmission based on the first signaling; and determining, by the terminal, target transmission power of each piece of beam information on a corresponding uplink resource.

FIG. 2

Description

CROSS-REFERENCE TO RELATED APPLICATIONS

This application claims priority to Chinese Patent Application No. 202210307017.6 filed on March 25, 2022, which is incorporated herein by reference in its entirety.

TECHNICAL FIELD

This application relates to the field of communication technologies, and specifically, to a power control method and apparatus, and a terminal.

BACKGROUND

A network performs power control on uplink transmission to reduce mutual interference between terminals, so that receive power of a base station from different terminals is approximated. In addition, simultaneous transmission of at least two pieces of beam information (that is, multiple panels) for uplink transmission can improve throughput and reliability. The currently defined power control parameter indication method and uplink transmission power calculation method are provided for the case where only one piece of beam information is supported for transmission at one moment. However, there is no corresponding power control scheme for uplink transmission to support simultaneous transmission of multiple pieces of beam information.

SUMMARY

Embodiments of this application provide a power control method and apparatus, and a terminal, which can resolve the problem of no corresponding power control scheme for uplink transmission to support simultaneous transmission of multiple pieces of beam information.

According to a first aspect, an embodiment of this application provides a power control method, including:

receiving, by a terminal, first signaling sent by a network-side device;
determining, by the terminal, at least two pieces of beam information for uplink transmission based on the first signaling; and
determining, by the terminal, target transmission power of each piece of beam information on a corresponding uplink resource.

According to a second aspect, an embodiment of this application provides a power control apparatus, including:

a receiving module, configured to receive first signaling sent by a network-side device;
a first processing module, configured to determine at least two pieces of beam information for uplink transmission based on the first signaling; and
a second processing module, configured to determine target transmission power of each piece of beam information on a corresponding uplink resource.

According to a third aspect, an embodiment of this application provides a terminal. The terminal includes a processor and a memory. The memory stores a program or instructions capable of being run on the processor. The program or instructions are executed by the processor to implement steps of the power control method according to the first aspect.

According to a fourth aspect, an embodiment of this application provides a terminal, including a processor and a communication interface. The communication interface is configured to receive first signaling sent by a network-side device.

The processor is configured to determine at least two pieces of beam information for uplink transmission based on the first signaling; and determine target transmission power of each piece of beam information on an uplink resource corresponding to the beam information.

According to a fifth aspect, an embodiment of this application provides a readable storage medium. The readable storage medium stores a program or instructions. The program or instructions are executed by a processor to implement steps of the power control method according to the first aspect.

According to a sixth aspect, an embodiment of this application provides a chip. The chip includes a processor and a communication interface. The communication interface is coupled to the processor. The processor is configured to run a program or instructions to implement steps of the power control method according to the first aspect.

According to a seventh aspect, an embodiment of this application provides a computer program/program product. The computer program/program product is stored in a storage medium. The computer program/program product is executed by at least one processor to implement steps of the power control method according to the first aspect.

In the embodiments of this application, the terminal receives first signaling sent by the network-side device, and determines at least two pieces of beam information for uplink transmission based on the first signaling. When there are at least two pieces of beam information for uplink transmission, target transmission power of each piece of beam information on a corresponding uplink resource can be determined, so that the current problem of no corresponding power control scheme for uplink transmission to support simultaneous transmission of multiple pieces of beam information can be resolved.

## BRIEF DESCRIPTION OF THE DRAWINGS

FIG. 1 is a block diagram of a wireless communication system according to an embodiment of this application;
FIG. 2 is a flowchart of a power control method according to an embodiment of this application;
FIG. 3 is a block diagram of a power control apparatus according to an embodiment of this application;
FIG. 4 is a block diagram of a communication device according to an embodiment of this application; and
FIG. 5 is a block diagram of a hardware structure of a terminal according to an embodiment of this application.

## DETAILED DESCRIPTION

The technical solutions in the embodiments of this application are clearly described in the following with reference to the accompanying drawings in the embodiments of this application. Apparently, the described embodiments are merely some rather than all of the embodiments of this application. All other embodiments obtained by a person of ordinary skill in the art based on the embodiments of this application shall fall within the protection scope of this application.

In the specification and claims of this application, the terms "first", "second", and the like are intended to distinguish between similar objects, but are not intended to describe a specific sequence or order. It should be understood that the terms used in this way are interchangeable in a proper case, so that the embodiments of this application can be implemented in an order other than the order shown or described herein. In addition, the objects distinguished by using "first" and "second" are usually of the same type, and a quantity of the objects is not limited, for example, there may be one or more first objects. In addition, "and/or" in the specification and claims indicates at least one of the connected objects, and the character "/" usually indicates an "or" relationship between the associated objects.

It is to be noted that the techniques described in the embodiments of this application are not limited to a long-term evolution (Long Term Evolution, LTE)/LTE-advanced (LTE-Advanced, LTE-A) system, and may be further applied to various wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are usually used interchangeably. The described technique may be applied to the systems and radio techniques mentioned above, and may also be applied to other systems and radio techniques. The following describes a new radio (New Radio, NR) system for the exemplary purpose and uses NR terminology throughout most of the following description, but these techniques may also be applied to a system other than the NR system, for example, the 6th generation (6th Generation, 6G) communication system.

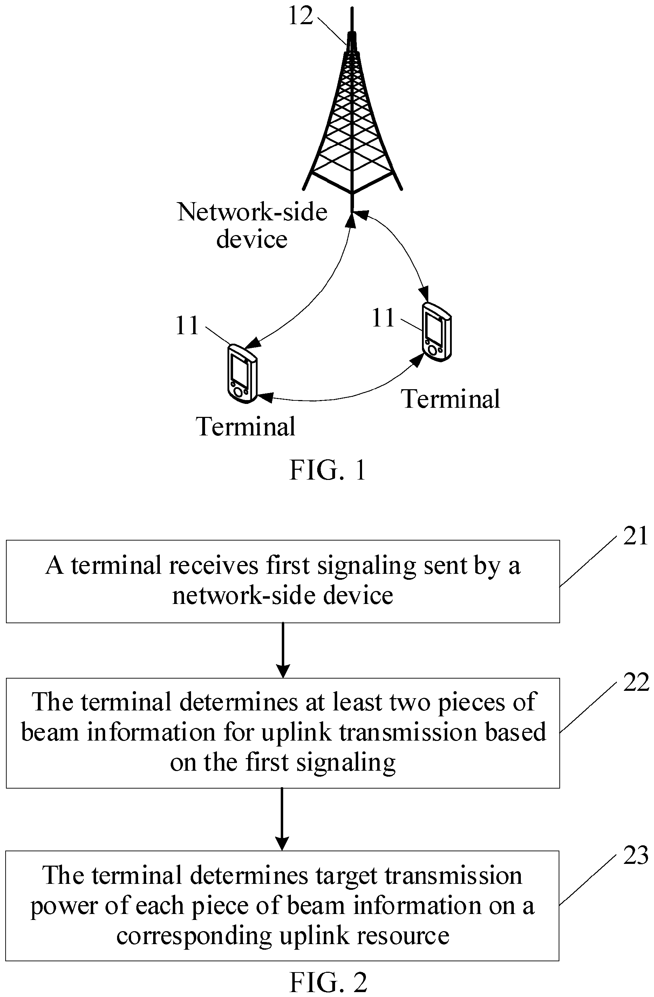

FIG. 1 is a block diagram of a wireless communication system to which the embodiments of this application are applicable. The wireless communication system includes a terminal 11 and a network-side device 12. The terminal 11 may be a mobile phone, a tablet personal computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device with a wireless communication function, such as a refrigerator, a television, a washing machine, or furniture), a game console, a personal computer (personal computer, PC), a teller machine, a self-service machine, or another terminal-side device. The wearable device includes: a smartwatch, a smart band, smart headphones, smart glasses, smart jewelry (a smart bangle, a smart bracelet, a smart ring, a smart necklace, a smart anklet, and a smart ankle chain), a smart wristband, smart clothing, and the like. It needs to be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network unit. The radio access network may include a base station, a wireless local area network (Wireless Local Area Networks, WLAN) access point, a Wi-Fi node, or the like. The base station may be referred to as NodeB, evolved NodeB (eNB), an access point, a base transceiver station (Base Transceiver Station, BTS), a radio base station, a radio transceiver, a basic service set (Basic Service Set, BSS), an extended service set (Extended Service Set, ESS), home NodeB, home evolved NodeB, a transmission reception point (Transmission Reception Point, TRP), or another proper term in the field. The base station is not limited to a specific technical term as long as the same technical effect is achieved. It needs to be noted that only a base station in the NR system is used as an example for description in the embodiments of this application, but a specific type of the base station is not limited.

First, relevant content involved in the embodiments of this application is described below.

I. Description of multi-TRP scenarios

1. Multi-downlink control information (Downlink Control Information, DCI) scheduled multi-transmission reception point (transmission reception point, TRP)

The multi-TRP (MTRP) transmission technique is introduced to improve the throughput of data transmission.

Multi-DCI (mDCI, multi-DCI) scheduling: Each TRP sends its own physical downlink control channel (Physical downlink control channel, PDCCH), and each PDCCH schedules its own physical downlink shared channel (Physical downlink shared channel, PDSCH)/physical uplink shared channel (Physical Uplink Shared Channel, PUSCH)/physical uplink control channel (Physical Uplink Control Channel, PUCCH). In this case, multiple control resource sets (Control resource set, CORESET) configured for a terminal (UE) are associated to different radio resource control (Radio Resource Control, RRC) parameters, for example, a control resource set pool index (CORESETPoolIndex) corresponds to different TRPs.

2. Single-DCI scheduled multi-TRP

In a scenario that supports multi-TRP, one DCI is used to dynamically schedule a PUSCH repetition (repetition) transmission scheme by time division multiplexing (TDM).

For each PUSCH repetition, multiple transmit beams (spatial relation) corresponding to different TRPs are used respectively for transmission, to improve the reliability of PUSCH transmission.

For Type A (slot-level) PUSCH repetition, one PUSCH repetition can be regarded as one PUSCH transmission occasion in each slot. For Type B PUSCH repetition, one PUSCH repetition is a nominal repetition (nominal repetition).

The DCI may indicate two sets of beams (spatial relation), a precoding matrix (Transmitted Precoding Matrix Indicator, TPMI), a power control parameter, and the like. In addition, a new 2-bit indication field is added in the DCI to support dynamic adjustment between STRP and MTRP, and flexible exchange of a sequence of the transmit beams for the PUSCH repetition.

A mapping relationship between each PUSCH repetition and the beam may be configured based on the RRC parameters as cyclic mapping (cyclic mapping) and sequential mapping (sequential mapping).

In a PUCCH repetition transmission scheme in a scenario that supports multi-TRP, the network activates two beams (spatial relation) for a PUCCH resource or a PUCCH group (PUCCH group), and each PUCCH repetition is transmitted by using the two beams. A mapping relationship between each PUCCH repetition and the beam may be configured based on the RRC parameters as cyclic mapping (cyclic mapping) and sequential mapping (sequential mapping).

The mentioned beam information may also be referred to as: beam identification information, spatial relation (spatial relation) information, spatial domain transmission filter (spatial domain transmission filter) information, spatial domain reception filter (spatial domain reception filter) information, spatial filter (spatial filter) information, transmission configuration indication state (TCI state) information, quasi co-location (Quasi Co-Location, QCL) information, QCL parameters, or the like. Downlink beam information may usually be represented by TCI state information or QCL information. Uplink beam information may usually be represented by TCI state information or spatial relation information.

II. About power control (power control, PC) mechanism

1. The effect of power control includes: power maintenance, performance improvement, and interference reduction.

Power maintenance: Power is adjusted based on a distance between UE and a base station, to ensure approximated power of the arrival of signals at the base station.

Performance improvement: Power is dynamically adjusted based on channel changes, to implement accurate and fast power adjustment.

Interference reduction: Adjacent channel power leakage is reduced, to reduce interference between users and between cells, and prolong battery life.

2. Power control is divided into downlink channel power control and uplink channel power control.

The downlink channel power control mainly relies on the configuration and implementation on the network side.

The uplink channel power control includes: PUSCH PC, PUCCH PC, sounding reference signal (Sounding Reference Signal, SRS) PC, and physical random access channel (Physical Random Access Channel, PRACH) PC.

In addition, power control further includes: power headroom report (Power headroom report, PHR), power scaling (Power scaling/sharing), and the like.

The power headroom report is mainly to assist the base station in scheduling. The power scaling is mainly to share power to ensure transmission of a cell/channel with a high priority.

3. In PC parameters:

$P_{CMAX,f,c}(i)$: maximum output power configured for the terminal. Transmission power does not exceed the configured maximum output power.

P0: target power value at an open-loop receive end. Usually, a larger value indicates higher UL transmission power and a higher received signal-to-interference plus noise ratio (signal-to-noise and interference ratio, SINR).

PL (path loss): The path loss is estimated based on a pathloss reference signal (pathloss reference signal, PLRS), that is, a synchronization signal block (Synchronization Signal and PBCH block, SSB) and a channel state information reference signal (Channel State Information Reference Signal, CSI-RS). The UE needs to maintain multiple path loss estimates and call the path loss estimates according to an index configured or indicated by the network.

Alpha: fractional path-loss compensation factor, in the range of [0,1].

PUSCH and SRS: When alpha is 0, the path loss is completely omitted. When alpha is 1, the path loss is fully compensated, and in this case, cell center UE UL power is excessively low (that is, the overall throughput is excessively low), and cell edge UE UL power is excessively high (that is, the inter-cell interference is excessively large).

PUCCH and PRACH: require no throughput but reliability, so alpha is taken as 1.

f(l): power control adjustment state (Power control adjustment state) value, which is divided into an accumulation mode and an absolute assignment mode.

CLI: closed-loop power control index (closedLoopIndex), l = 0 or l = 1.

(1) PUCCH PC parameters:

PLRS: pathloss reference signal, configured in PUCCH-PathlossReferenceRS in the RRC parameters.

P0: There are 8 pairs, that is, its index $q_u$ = 0-7, where a value of $q_u$ is configured based on PUCCH-SpatialRelationInfo in the RRC parameters.

Alpha: There is no alpha for the PUCCH, or alpha = 1.

CLI: configured in PUCCH-SpatialRelationInfo in the RRC parameters, with a value of 0 or 1.

(2) SRS PC parameters:

PLRS: indicated by PathlossReferenceRS in the RRC parameters.

P0 and alpha: The index of the combination of P0 and $\alpha$ is $q_s$, P0 and $\alpha$ are parameters configured in SRS-ResourceSet, which are bandwidth part (Bandwidth Part, BWP)-level configuration parameters.

CLI: closed-loop power control index. If SRS power control and PUSCH power control are associated (indicated by higher layer signaling srs-PowerControlAdjustmentStates), the SRS power control is determined based on the PUSCH. Otherwise, the SRS uses independent power control, and l = 0 (which can only be implemented through DCI 2_3).

(3) PUSCH PC parameters:

PLRS: path loss estimate measured based on a reference signal (Reference Signal, RS) with the index of $q_d$. The index is indicated by higher layer signaling PUSCH-PathlossReferenceRS, $q_d$= 0-3.

PUSCH-PathlossReferenceRS includes one ID and one RS. The RS may be SSB or CSI-RS.

If there is no PUSCH-PathlossReferenceRS, SSB included in a master information block (MasterInformation-

Block, MIB) is used.

For PUSCH transmission, when the UE has SRI-PUSCH-PowerControl with different $q_d$,

for DCI format 0_1 including SRI information, the UE obtains the association (one-to-one correspondence) of an SRS resource indicator (SRS resource indicator, SRI) and PUSCH-PathlossReferenceRS-Id through higher layer signaling; when the PUSCH is scheduled by DCI format 0_1 including a certain SRI, $q_d$ of the corresponding PUSCH-PathlossReferenceRS is used;

for DCI format 0_0 and spatial relation information (spatial relation info) configured for the PUCCH, $q_d$ corresponding to Rs in spatial relation info of the PUCCH is used;

for DCI format 0_0 and no spatial relation info configured for the PUCCH or no SRI information for DCI format 0_1 or no SRI-PUSCH-PowerControl configured, RS with PUSCH-PathlossReferenceRS-Id of 0 is used as the path loss estimate;

for Msg3 PUSCH, the UE uses RS resource index $q_d$ of the corresponding PRACH; and

for ULRRC grant free, $q_d$ is configured by a higher layer; if $q_d$ is not configured, RS with PUSCH-PathlossReferenceRS-Id of 0 is used as the path loss estimate.

P0 and alpha: consisting of $P_{o\_NOMINALPUSCHf,c}(j)$ and $P_{o\_NOMINALPUSCHf,c}(j)$. The former has no b subscript and is the carrier-level component (-202, -200, ..., 22, 24 dbm) common for cells. The latter is the BWP-level component (-16, -15, ..., 14, 15) configured independently by the UE.

The latter is configured in pairs with alpha, and there are a total of 32 pairs, which are referred to as P0-PUSCH-AlphaSet.

j = 0 is for RRC with no P0-PUSCH-AlphaSet configured or for Message 3 PUSCH. A specific value is assigned by relevant higher layer signaling (preambleReceivedTargetPower, msg3-DeltaPreamble, or msg3-Alpha).

j = 1 is for URLLC grant free transmission. A specific value is assigned by ConfiguredGrantConfig-related higher layer signaling.

j = 2-31: related to Grant-based transmission, different j may be configured for different beams.

For DCI format 0_1 including SRI information, the UE obtains the association (one-to-one correspondence) of an SRI and AlphaSet Id through higher layer signaling SRI-PUSCH-PowerControl; when the PUSCH is scheduled by DCI format 0_1 including a certain SRI, AlphaSet of the corresponding ID is used.

For DCI format 0_1 that does not include SRI information or DCI format 0_0 or no configuration of SRI-PUSCH-PowerControl, a value of the first P0-PUSCH-AlphaSet of AlphaSet is used.

$f_{b,f,c}(i, l)$: power control adjustment state value, where l is related to SRI, l = 0 or 1.

If a higher layer configures tpc-Accumulation, the value is the accumulation mode (-1, 0, 1, 3 dB);

if a higher layer does not configure tpc-Accumulation, the value is the direct assignment mode (-4, -1, 1, 4 dB); and DCI 0_0, 0_1, 2_2 include the adjustment value.

Enhancement to the PC mechanism:

The PUSCH supports the use of a Media Access Control control element (Media Access Control Control Element, MAC CE) to update a mapping relationship between sri-PUSCH-PowerControlId and PUSCH-PathlossReferenceRS-Id.

If grant-based/grant-free PUSCH & DCI format 0_1 scheduled/activated by DCI format 0_1 does not include SRI field, RS resource index corresponding to PUSCH-PathlossReferenceRS-Id associated to sri-PUSCH-PowerControlId = 0 is used as PL RS.

SRS: supporting the use of MAC CE to activate and update one PL RS for an SRS resource set.

Enhancement to the PC mechanism in an mTRP scenario:

PUSCH PC parameter set (power control parameter set):

For an sDCI-scheduled PUSCH repetition scheme, when DCI format 0_1/0_2 indicates SRS resources in two sets through two SRI fileds, the SRS resources correspond to two power control parameter sets (using SRI-PUSCH-PowerControl) respectively. The SRI fields are associated with the two PC parameter sets.

When only one SRS resource in the set, the SRI field is default in the DCI. In this case, if enablePL-RS-UpdateForPUSCH-SRS is configured, TRP1 uses the first group of values {the first value in P0 AlphaSet, PL-RS corresponding to the first sri PUSCH power control associated with the first SRS resource set, closed-loop index l = 0}, and TRP2 uses the second group of values {the second value in P0 AlphaSet, PL-RS corresponding to the first sri PUSCH power control associated with the second SRS resource set, closed-loop index l = 1 (if twoPUSCH PC AdjustmentState is configured), otherwise 1 = 0}.

Otherwise, TRP1 uses the first group of values {the first value in P0 AlphaSet, that is, PL-RS with PUSCH PathlossReferencer Id = 0 and closed-loop index l = 0}, and TRP2 uses the second group of values {the second value in P0 AlphaSet, that is, PL-RS with PUSCH PathlossReferencer Id = 1 and closed-loop index l = 1 if twoPUSCH PC AdjustmentState is configured, otherwise 1 = 0}.

When DCI format 0_1/0_2 indicates per-TRP OLPC set,

if the DCI has two SRI fields (domain), an existing field (1 bit) is used for OLPC set indication and the second p0-PUSCH-SetList-r16.

If a value of the field is equal to "0", the UE uses the SRI PUSCH PowerControlId value of an SRI field value corresponding to each TRP, and a value of P0 is determined from SRI PUSCH PowerControl.

If a value of the field is equal to "1", the UE determines a value of P0 based on the first value in the P0 PUSCH set, where the P0 PUSCH SetId value is mapped to an SRI field value corresponding to each TRP.

If the DCI does not have two SRI fields, an existing field (1 or 2 bits) is used for OLPC set indication and a second p0-PUSCH-SetList-r16.

If a value of the field is equal to "0" or "00", the UE determines P0 values of two TRPs (where each TRP corresponds to one P0 value) from the first and second default P0 values.

If a value of the field is equal to "1" or "01", the UE determines P0 values of two TRPs (where each TRP corresponds to one P0 value) from the first value in the first P0-PUSCH-Set-r16_list and the first value in the second P0-PUSCH-Set-r16_list.

If a value of the field is equal to "10" or "11", the UE determines P0 values of two TRPs (where each TRP corresponds to one P0 value) from the second value in the first P0-PUSCH-Set-r16_list and the second value in the second P0-PUSCH-Set-r16_list.

PUSCH CLI: For PUCCH and PUSCH, the second TPC field may be configured for the RRC. Each TPC field is used for one CLI value.

(4) PUCCH PC parameters

Frequency range (Frequency range) FR2: supporting the association of different PUCCH spatial relation info and different PC parameters, for determining PC parameters of different TRPs. When the MAC CE indicates the spatial relation for the PUCCH, the PC parameter in spatial relation info can be determined.

FR1: supporting two PC parameter sets, for different TRPs. Each set has p0, pathloss RS ID, and a closed-loop index. The PC parameter set may be considered as spatial relation info. When the MAC CE indicates the spatial relation for the PUCCH, the PC parameter in spatial relation info can be determined, only referenceSignal in spatial relation info is omitted.

A new TCI framework is introduced, which may be referred to as a unified TCI framework (unified TCI framework), that is, the same beam (beam) indicated by the network using the MAC CE and/or DCI may be used for transmission with multiple channels, and this beam may also be referred to as a common beam (common beam).

The unified TCI framework includes two modes: joint TCI and separate TCI, and is configured based on RRC signaling of the network.

The network configures a TCI state pool state pool (TCI state pool) through the RRC signaling, and activates one or more TCI states using MAC CE commands. When the MAC CE activates a TCI state corresponding to one codepoint (codepoint), the activated TCI state is directly applied to a target signal. When the MAC CE activates TCI states corresponding to multiple codepoints, the network then uses a TCI field in the DCI to indicate one codepoint, and a TCI state corresponding to the codepoint is applied to a target signal.

For joint TCI (joint TCI), each codepoint corresponds to one TCI state.

For separate TCI (separate TCI), each codepoint may correspond to one DL TCI state and one UL TCI state, or one DL TCI state, or one UL TCI state.

When the network uses the DCI for beam indication, DCI format 1_1/1_2 with DL configuration and DCI format 1_1/1_2 without DL configuration are supported.

Effective time of the TCI state indicated by Beam indication DCI (beam application time) is defined as the first slot that applies the indicated TCI, which is at least Y symbols after the last symbol indicated and confirmed by a joint or separate DL/UL beam.

PLRS in the power control parameters is configured by the network in the TCI state or is associated with the TCI state.

Other parameters (set: P0, alpha, close loop index) in the power control parameters are configured by the network and associated to the TCI state. The setting of each of PUCCH, PUSCH, and SRS is associated with the TCI state or is included in configuration information of each channel.

For a carrier aggregation (Carrier Aggregation, CA) scenario, the network indicates common QCL information and/or a common UL TX spatial filter for cross-group configuration of CC.

4. Source RS of TCI state

DL: CSI-RS for beam management, CSI-RS is for tracking.
UL: SSB, CSI-RS for beam management, CSI-RS for tracking, and SRS for beam management.

5. Target signal of TCI state

DL: (UE-dedicated reception on PDSCH, UE-dedicated reception on all core sets or subsets, non-periodic CSI-RS resource for CSI, non-periodic CSI-RS resource for BM, DMR associated with non-UE-dedicated reception on the core set, and associated PDSCH (associated with serving cell PCI)).
UL: dynamic grant/configured grant-based PUSCH, all dedicated PUCCH resources, non-periodic SRS resource or resource set of BM, antenna switching SRS, codebook SRS, and non-codebook SRS.
The following describes in detail a power control method provided in the embodiments of this application through some embodiments and application scenarios thereof with reference to the accompanying drawings.
As shown in FIG. 2, an embodiment of this application provides a power control method, including the following steps:

Step 21: A terminal receives first signaling sent by a network-side device.
Step 22: The terminal determines at least two pieces of beam information for uplink transmission based on the first signaling.

Optionally, the first signaling sent by the network-side device to the terminal may be used for the terminal to determine the at least two pieces of beam information for uplink transmission. For example, the determination of the at least two pieces of beam information for uplink transmission may be implemented on the network side, and the terminal may obtain the at least two pieces of beam information for uplink transmission based on the first signaling.
Optionally, the first signaling may include, but is not limited to, at least one of the following information:

downlink control information;
a configured grant;
configuration information for physical uplink control channel;
configuration information for sounding reference signal;
a control resource set pool index; and
an uplink grant.

Optionally, the at least two pieces of beam information may be from one beam information set, or may be from different beam information sets respectively; and the beam information set may be configured based on RRC signaling.
The beam information includes, but is not limited to, at least one of the following: a TCI state, spatial information, a spatial filter, a reference signal (for example, a pathloss reference signal), an SRS resource, an antenna panel (Panel), an SRS resource set, a TCI state pool, a power control parameter set list, a TRP index, for example, a control resource set pool index (CoresetPoolindex), and a physical cell identifier (Physical Cell Identifier, PCI).
The antenna panel may also be referred to as: an antenna group, an antenna port group, an antenna set, an antenna port set, a beam set, a beam subset, an antenna array, an antenna port array, an antenna subarray, an antenna port subarray, a logical entity, an entity, an antenna entity, a panel entity (panel entity), a timing error group (timing error group, TEG), a terminal capability value, a terminal capability value set, or the like.
An identifier of Panel may be: an antenna panel identifier, a reference signal resource identifier, a reference signal resource set identifier, a TCI state identifier, a QCL information identifier, a spatial relation identifier, a terminal capability value index, a terminal capability value set index, or the like.
Step 23: The terminal determines target transmission power of each piece of beam information on a corresponding uplink resource.
The target transmission power of each piece of beam information on the corresponding uplink resource is the target transmission power determined for each piece of beam information on the corresponding uplink resource.
Optionally, the uplink resource includes at least one of the following:

at least one consecutive orthogonal frequency division multiplex (Orthogonal frequency division multiplex, OFDM) symbol in one slot corresponding to the beam information;

a nominal repetition corresponding to the beam information;

at least one spatial transport stream corresponding to the beam information;

at least one physical resource block (Physical Resource Block, PRB) corresponding to the beam information, where the at least one physical resource block may be determined by at least one of a starting position of a bandwidth part (BWP), a starting position of an uplink transmission, and a quantity of consecutive physical resource blocks;

at least one consecutive physical resource block corresponding to the beam information;

a frequency-hopping resource corresponding to the beam information;

at least one subcarrier corresponding to the beam information, for example, one beam is transmitted on an odd-numbered subcarrier of a PUSCH frequency domain resource, and the other beam is transmitted on an even-numbered subcarrier of the PUSCH frequency domain resource;

a transmission occasion of an SRS corresponding to the beam information; and

a transmission occasion of a PUCCH corresponding to the beam information.

In the foregoing solution, the terminal receives first signaling sent by the network-side device, and determines at least two pieces of beam information for uplink transmission based on the first signaling. When there are at least two pieces of beam information for uplink transmission, target transmission power of each piece of beam information on a corresponding uplink resource can be determined, so that the current problem of no corresponding power control scheme for uplink transmission to support simultaneous transmission of multiple pieces of beam information can be resolved.

Optionally, that the terminal determines target transmission power of each piece of beam information on a corresponding uplink resource includes:

determining, by the terminal, first transmission power of each piece of beam information on the corresponding uplink resource based on power control parameter information corresponding to each piece of beam information; and determining maximum transmission power as the target transmission power, when the first transmission power is greater than the maximum transmission power.

The power control parameter information and the beam information are in a one-to-one correspondence. Optionally, the correspondence between the power control parameter information and the beam information may be configured through RRC signaling or indicated by MAC CE signaling.

Optionally, the power control parameter information includes at least one of a power control parameter set and a pathloss reference signal index, for example, a power control parameter set may include {p0, alpha, closeloopindex} and other parameters.

For example, in a case that one piece of beam information corresponds to one channel, power control parameter information corresponding to each piece of beam information is power control parameter information corresponding to the channel. The determining, by the terminal, first transmission power of each piece of beam information on the corresponding uplink resource based on power control parameter information corresponding to each piece of beam information includes: performing calculation based on the power control parameter information corresponding to the channel to obtain transmission power for uplink transmission, and determining the transmission power as the first transmission power.

In another example, in a case that two pieces of beam information correspond to one channel, each piece of beam information corresponds to one set of power control parameter information, the two pieces of beam information respectively correspond to different transmission resources of the channel, and the terminal obtains first transmission power respectively corresponding to the two pieces of beam information based on the power control parameter information and the different transmission resources.

In another example, in a case that one piece of beam information corresponds to at least two channels, power control parameter information corresponding to each piece of beam information includes: power control parameter information corresponding to each channel. The determining, by the terminal, first transmission power of each piece of beam information on the corresponding uplink resource based on power control parameter information corresponding to each piece of beam information includes: performing calculation based on the power control parameter information corresponding to each channel to obtain transmission power for uplink transmission on each channel, and determining a sum of transmission power for uplink transmission on all the channels as the first transmission power.

Optionally, in a case that the terminal performs calculation based on power control parameter information corresponding to each piece of beam information to obtain first transmission power corresponding to the beam information, if the first transmission power is less than or equal to maximum transmission power, the first transmission power is determined as the target transmission power; or if the first transmission power is greater than maximum transmission power, the maximum transmission power is determined as the target transmission power, so that uplink transmission power corresponding to each piece of beam information is limited to the maximum transmission power.

Optionally, the maximum transmission power is maximum transmission power configured for each piece of beam information of the terminal; or the maximum transmission power is determined based on a first parameter, and a sum of maximum transmission power corresponding to the at least two pieces of beam information is less than or equal to the first parameter.

The first parameter is one of the following:

maximum output power configured for each cell;
a sum of maximum output power of the at least two pieces of beam information configured for each cell; and
maximum output power configured for simultaneous transmission of the at least two pieces of beam information of each cell.

In other words, the first parameter is maximum output power configured for each cell; or the first parameter is a sum of maximum output power of the at least two pieces of beam information configured for each cell; or the first parameter is maximum output power configured for simultaneous transmission of the at least two pieces of beam information of each cell.

For example, the terminal may obtain the maximum transmission power corresponding to each piece of beam information by allocating the first parameter proportionally to the at least two pieces of beam information or in another manner. This is not limited in the embodiments of this application.

Optionally, that the terminal determines target transmission power of each piece of beam information on a corresponding uplink resource includes:

determining, by the terminal, the target transmission power of each piece of beam information on the corresponding uplink resource, based on performing power allocation in priority order of a first object, where the first object includes: at least one of the beam information and a transmission resource;
or
determining, by the terminal, the target transmission power of each piece of beam information on the corresponding uplink resource, based on performing power allocation in priority order of a second object, where the second object includes: at least one of the beam information, a carrier, and the transmission resource.

The transmission resource includes, but is not limited to, at least one of the following: a channel, a signal, or different transmission occasions of one channel.

For example, in a single carrier scenario, the terminal may perform power allocation based on a priority of beam information and a priority order of a transmission resource, to determine target transmission power of each piece of beam information on an uplink resource corresponding to the beam information. That power allocation is performed based on the priority of the beam information and the priority order of the transmission resource includes: performing power allocation based on the priority order of the beam information, performing power allocation based on the priority order of the transmission resource, first performing power allocation based on the priority order of the beam information and then performing power allocation based on the priority order of the transmission resource, first performing power allocation based on the priority order of the transmission resource and then performing power allocation based on the priority order of the beam information, or the like. This is not limited in the embodiments of this application.

In another example, in a carrier aggregation scenario, in addition to performing power allocation based on a priority of beam information and a priority order of a transmission resource, the terminal may also perform power allocation based on a priority order of a carrier, to determine target transmission power of each piece of beam information on an uplink resource corresponding to the beam information. That power allocation is performed based on the priority of the beam information, the priority of the transmission resource, and the priority order of the carrier may include: performing power allocation based on one of the priority of the beam information, the priority of the transmission resource, and the priority of the carrier, performing power allocation based on two of the priority of the beam information, the priority of the transmission resource, and the priority of the carrier, for example, when power allocation is performed based on two of the above, an order of these two may be AB or BA, as described in the foregoing embodiment, or performing power allocation based on the priority of the beam information, the priority of the transmission resource, and the priority of the carrier, where an order may be ABC, ACB, BAC, BCA, CAB, or CBA. This is not limited in the embodiments of this application.

Optionally, the determining, by the terminal, the target transmission power of each piece of beam information on the corresponding uplink resource, based on performing power allocation in priority order of a first object includes:

determining, by the terminal, first transmission power of each piece of beam information on the corresponding uplink resource based on power control parameter information corresponding to each piece of beam information, where the power control parameter information and the beam information are in a one-to-one correspondence, for example, the correspondence between the power control parameter information and the beam information may be configured through RRC signaling or indicated by MAC CE signaling. This is not limited in the embodiments of this application; and
determining, by the terminal in a case that the first transmission power is greater than maximum transmission power, the target transmission power of each piece of beam information on the corresponding uplink resource, based on performing power allocation in priority order of the first object.

For example, in a single carrier scenario, calculation may be performed based on power control parameter information corresponding to each piece of beam information to obtain first transmission power for uplink transmission. If first transmission power for a certain piece of beam information is greater than maximum transmission power, power allocation is performed for the beam information, so that uplink transmission power of the beam information after power allocation is less than or equal to the maximum transmission power.

Optionally, the maximum transmission power is maximum transmission power configured for each piece of beam information of the terminal; or the maximum transmission power is determined based on a first parameter, and a sum of maximum transmission power corresponding to the at least two pieces of beam information is less than or equal to the first parameter.

The first parameter is maximum output power configured for each cell; or the first parameter is a sum of maximum output power of the at least two pieces of beam information configured for each cell; or the first parameter is maximum output power configured for simultaneous transmission of the at least two pieces of beam information of each cell.

Optionally, the maximum transmission power configured for each piece of beam information of the terminal needs to meet at least one of the following conditions:

maximum power correspondingly measured for each piece of beam information is within a predetermined range;
a maximum value of maximum power correspondingly measured for all pieces of beam information is within a predetermined range; and
a minimum value of maximum power correspondingly measured for all pieces of beam information is within a predetermined range.

Optionally, the determining, by the terminal in a case that the first transmission power is greater than maximum transmission power, the target transmission power of each piece of beam information on the corresponding uplink resource, based on performing power allocation in priority order of the first object includes:
determining, by the terminal in a case that the first transmission power is greater than the maximum transmission power, the target transmission power of each piece of beam information on the corresponding uplink resource, based on performing power allocation in priority order of the transmission resource.

For example, if first transmission power obtained through calculation based on power control parameter information corresponding to a certain piece of beam information is greater than maximum transmission power, power allocation may be performed based on a priority order of a transmission resource, until uplink transmission power corresponding to the beam information is less than or equal to the maximum transmission power. Using an example in which the transmission resource is a channel for description, a beam corresponds to a channel 1, a channel 2, and a channel 3, and priorities of the channel 1, the channel 2, and the channel 3 decrease gradually, that is, power allocation is performed one by one in the order of the channel 1, the channel 2, and the channel 3. If total transmission power corresponding to the beam information exceeds the maximum transmission power when power is allocated to a channel (for example, the channel 3), the channel 3 may be discarded. Optionally, the power headroom may be reserved for power allocation of other channel information, or transmission power of the channel 3 may be reduced until total transmission power corresponding to the beam information is less than or equal to the maximum transmission power. In addition, power allocation may be performed based on the maximum transmission power, for example, if total transmission power corresponding to multiple channels exceeds the maximum transmission power, the maximum transmission power may be allocated to each channel proportionally; or transmission power of some or all channels may be reduced by a portion, so that total transmission power corresponding to the beam information is less than or equal to the maximum transmission power. This is not limited in the embodiments of this application.

Optionally, in a case that beam information corresponds to at least two channels, power control parameter information corresponding to the beam information may include power control parameter information corresponding to each channel. For a specific manner of determining the first transmission power, refer to the foregoing embodiment. To avoid repetition, details are not described herein again.

Optionally, the determining, by the terminal, the target transmission power of each piece of beam information on the corresponding uplink resource, based on performing power allocation in priority order of a first object includes:

determining, by the terminal, first transmission power of each piece of beam information on the corresponding uplink resource based on power control parameter information corresponding to each piece of beam information, where the power control parameter information and the beam information are in a one-to-one correspondence; and
determining, by the terminal in a case that a sum of first transmission power of the at least two pieces of beam information is greater than a second parameter, the target transmission power of each piece of beam information on the corresponding uplink resource, based on performing power allocation in priority order of the first object.

Optionally, in a case that beam information corresponds to one channel, power control parameter information corresponding to the beam information is power control parameter information corresponding to the channel; and in a case that beam information corresponds to at least two channels, power control parameter information corresponding to the beam information may include power control parameter information corresponding to each channel. For a specific manner of determining the first transmission power, refer to the foregoing embodiment. To avoid repetition, details are not described herein again.

For example, in a single carrier scenario, the terminal may perform power allocation based on a priority of beam information and a priority order of a transmission resource, so that a sum of target transmission power of all pieces of beam information on uplink resources corresponding to the beam information is less than the second parameter. That power allocation is performed based on the priority of the beam information and the priority order of the transmission resource may include: performing power allocation based on one of the priority of the beam information and the priority of the transmission resource, first performing power allocation based on the priority order of the beam information and then performing power allocation based on a signal or a priority order of the signal, first performing power allocation based on the priority order of the transmission resource and then performing power allocation based on the priority order of the beam information, or the like. This is not limited in the embodiments of this application.

For example, in a case that a sum of first transmission power corresponding to all pieces of beam information is greater than a second parameter, power allocation may be performed sequentially based on a priority order of the beam information, until a sum of first transmission power corresponding to all pieces of beam information is less than or equal to the second parameter. For example, a priority of beam information is determined based on a beam information index or a coresetPoolIndex value, for example, a small index corresponds to a high priority. In addition, the manner of performing power allocation based on the priority of the transmission resource may be similar to the manner of performing power allocation based on the priority of the beam information. Details are not described herein again.

In another example, in a case that a sum of first transmission power corresponding to all pieces of beam information is greater than a second parameter, power allocation may be first performed sequentially based on a priority order of a transmission resource. If the sum is still greater than the second parameter after the power allocation performed based on the priority of the transmission resource, power allocation may be further performed sequentially based on a priority order of beam information, until a sum of first transmission power corresponding to all pieces of beam information is less than or equal to the second parameter. In addition, the manner of performing power allocation in the order of first the priority of the beam information and then the priority of the transmission resource may be similar to the foregoing manner of power allocation. For example, multiple pieces of beam information include beam information 1, beam information 2, and beam information 3, and priorities of the beam information 1, the beam information 2, and the beam information 3 decrease gradually. When total transmission power of the multiple pieces of beam information exceeds a second parameter, power allocation may be performed one by one in the order of the beam information 1, the beam information 2, and the beam information 3. If total transmission power exceeds the second parameter when power is allocated to a piece of beam information (for example, the beam information 3), the beam information 3 may be discarded, or transmission power of the beam information 3 may be reduced until total transmission power is less than or equal to the second parameter (optionally, for the manner of reducing the transmission power of the beam information 3, refer to the foregoing embodiment of power allocation of single beam information). In addition, power allocation may be performed based on the second parameter, for example, if total transmission power corresponding to multiple pieces of beam information exceeds the second parameter, the second parameter may be allocated to each piece of beam information proportionally; or transmission power of some or all pieces of beam information may be reduced by a portion (optionally, for the manner of reducing the transmission power of the beam information, refer to the foregoing embodiment of power allocation of single beam information), so that total transmission power corresponding to the multiple pieces of beam information is less than or equal to the second parameter. This is not limited in the embodiments of this application.

Optionally, in a case that uplink transmission power for each piece of beam information is less than or equal to the maximum transmission power, it may be further considered that a sum of uplink transmission power for all pieces of beam information is less than or equal to the second parameter, so that target transmission power of each piece of beam information is limited to maximum output power, and a sum of uplink transmission power for all pieces of beam information is limited to the second parameter; or in a case that a sum of uplink transmission power for all pieces of beam information is less than or equal to the second parameter, it may be further considered that uplink transmission power for each piece of beam information is less than or equal to the maximum transmission power, so that target transmission power of each piece of beam information is limited to maximum output power, and a sum of uplink transmission power for all pieces of beam information is limited to the second parameter.

Optionally, the second parameter is one of the following:

maximum output power configured for each cell;
a sum of maximum output power of the at least two pieces of beam information configured for each cell; and
maximum output power configured for simultaneous transmission of the at least two pieces of beam information of each cell.

In other words, the second parameter is maximum output power configured for each cell; or the second parameter is a sum of maximum output power of the at least two pieces of beam information configured for each cell; or the second parameter is maximum output power configured for simultaneous transmission of the at least two pieces of beam information of each cell.

Optionally, the determining, by the terminal, the target transmission power of each piece of beam information on the corresponding uplink resource, based on performing power allocation in priority order of a second object includes:

determining, by the terminal, first transmission power of each piece of beam information on the corresponding uplink resource based on power control parameter information corresponding to each piece of beam information, where the power control parameter information and the beam information are in a one-to-one correspondence; and

determining, by the terminal in a case that the first transmission power is greater than a third parameter, the target transmission power of each piece of beam information on the corresponding uplink resource, based on performing power allocation in priority order of the second object.

Optionally, in a case that beam information corresponds to one channel, power control parameter information corresponding to the beam information is power control parameter information corresponding to the channel; and in a case that beam information corresponds to at least two channels, power control parameter information corresponding to the beam information may include power control parameter information corresponding to each channel. For a specific manner of determining the first transmission power, refer to the foregoing embodiment. To avoid repetition, details are not described herein again.

Optionally, the determining, by the terminal in a case that the first transmission power is greater than a third parameter, the target transmission power of each piece of beam information on the corresponding uplink resource, based on performing power allocation in priority order of the second object includes:

determining, by the terminal in a case that the first transmission power is greater than the third parameter, the target transmission power of each piece of beam information on the corresponding uplink resource, based on performing power allocation in priority order of at least one of the carrier and the transmission resource.

For example, in a carrier aggregation scenario, it is allowed that when multiple pieces of beam information associated with uplink transmission are configured on at least one carrier, for each piece of beam information, power allocation may be performed based on the priority order of the carrier, power allocation may be performed based on the priority order of the transmission resource, power allocation may be performed first based on the priority order of the carrier and power allocation may be performed then based on the priority order of a signal or a priority order of the signal, power allocation may be performed first based on the priority order of the transmission resource and power allocation may be performed then based on the priority order of the carrier, or the like. This is not limited in the embodiments of this application. A specific implementation is similar to that in the foregoing embodiment, and details are not described herein again.

Optionally, the third parameter includes at least one of the following:

a sum of maximum transmission power of one piece of beam information on a plurality of carriers that is configured by the terminal; and

a sum of maximum transmission power of the at least two pieces of beam information on one carrier that is configured by the terminal.

Optionally, the third parameter is determined based on one of the following:

an uplink grant associated with each piece of beam information in a plurality of carriers in a carrier aggregation scenario; and

an uplink grant of the plurality of carriers.

In other words, the third parameter is determined based on an uplink grant associated with each piece of beam information in a plurality of carriers in a carrier aggregation scenario; or the third parameter is determined based on an uplink grant of the plurality of carriers.

Optionally, the determining, by the terminal, the target transmission power of each piece of beam information on the corresponding uplink resource, based on performing power allocation in priority order of a second object includes:

determining, by the terminal, first transmission power of each piece of beam information on the corresponding uplink resource based on power control parameter information corresponding to each piece of beam information, where the power control parameter information and the beam information are in a one-to-one correspondence; and determining, by the terminal in a case that a sum of first transmission power of the at least two pieces of beam information is greater than a fourth parameter, the target transmission power of each piece of beam information on the corresponding uplink resource, based on performing power allocation in priority order of the second object.

Optionally, in a case that beam information corresponds to one channel, power control parameter information corresponding to the beam information is power control parameter information corresponding to the channel; and in a case that beam information corresponds to at least two channels, power control parameter information corresponding to the beam information may include power control parameter information corresponding to each channel. For a specific manner of determining the first transmission power, refer to the foregoing embodiment. To avoid repetition, details are not described herein again.

For example, in a carrier aggregation scenario, it is allowed that when multiple pieces of beam information associated with uplink transmission are configured on at least one carrier, for the multiple pieces of beam information, the terminal may perform power allocation based on the priority of the beam information, the priority of the transmission resource, and the priority order of the carrier, which may specifically include: performing power allocation based on one of the priority of the beam information, the priority of the transmission resource, and the priority of the carrier, performing power allocation based on two of the priority of the beam information, the priority of the transmission resource, and the priority of the carrier, for example, when power allocation is performed based on two of the above, an order of these two may be AB or BA, as described in the foregoing embodiment, or performing power allocation based on the priority of the beam information, the priority of the transmission resource, and the priority of the carrier, where an order may be ABC, ACB, BAC, BCA, CAB, or CBA. This is not limited in the embodiments of this application.

For example, in a multi-carrier (CC) scenario, in a case that uplink transmission power for each piece of beam information is less than or equal to the maximum transmission power, it may be further considered that a sum of uplink transmission power for all pieces of beam information is less than or equal to the second parameter, so that target transmission power of each piece of beam information is limited to maximum output power, and a sum of uplink transmission power for all pieces of beam information is limited to the second parameter; or in a case that a sum of uplink transmission power for all pieces of beam information is less than or equal to the second parameter, it may be further considered that uplink transmission power for each piece of beam information is less than or equal to the maximum transmission power, so that target transmission power of each piece of beam information is limited to maximum output power, and a sum of uplink transmission power for all pieces of beam information is limited to the second parameter.

Optionally, the fourth parameter is one of the following:

a sum of maximum transmission power of a plurality of carriers in a carrier aggregation scenario that is configured by the terminal;

a sum of maximum transmission power of the at least two pieces of beam information on the plurality of carriers that is configured by the terminal; and

maximum output power configured by the terminal for simultaneous transmission of the at least two pieces of beam information on the plurality of carriers.

In other words, the fourth parameter is a sum of maximum transmission power of a plurality of carriers in a carrier aggregation scenario that is configured by the terminal; or the fourth parameter is a sum of maximum transmission power of the at least two pieces of beam information on the plurality of carriers that is configured by the terminal; or the fourth parameter is maximum output power configured by the terminal for simultaneous transmission of the at least two pieces of beam information on the plurality of carriers.

For example, in a scenario in which multiple carriers or carrier aggregation is configured for single-CC, one piece of beam information may be transmitted correspondingly on all the multiple carriers. In this case, a sum of transmission power on the multiple carriers may exceed maximum transmission power. The terminal needs to select a channel with a high priority according to a priority rule to continue transmission, until a sum of transmission power is less than or equal to the maximum transmission power.

For example, power may be first allocated for each piece of beam information based on a priority of each transmission resource, and then power is allocated based on a priority of the beam information.

Step 1: For each piece of beam information, the terminal allocates power based on a priority of a transmission resource, until total transmission power corresponding to the beam information is less than a first parameter. For each piece of beam information, when total transmit power (that is, a sum of transmit power of all channels/signals on multiple carriers) corresponding to the beam information exceeds a first parameter, the terminal performs power allocation on a transmission resource transmitted on the beam information. The first parameter is a sum of maximum transmit power corresponding to all the carriers that is configured by the terminal for one piece of beam information.

Step 2 (optional): When a sum of transmit power corresponding to all pieces of beam information exceeds a second parameter, the terminal then allocates power based on a priority of the beam information, until total transmit power of the terminal is less than the second parameter. The second parameter is a sum of maximum transmit power of multiple carriers that is configured by the terminal, or the second parameter is a sum of maximum transmit power of multiple pieces of beam information of multiple carriers that is configured by the terminal.

Optionally, the priority of the beam information may be predefined, for example, a priority of the first piece of beam information is the highest. Optionally, the priority of the beam information may be carried by the beam information. This is not limited in the embodiments of this application.

In another example, for all pieces of beam information, power may be allocated first based on the priority of the transmission resource, and then power allocation may be performed for each piece of beam information.

Step 1: When total transmit power of the terminal exceeds a third parameter, the terminal allocates power based on a priority of a transmission resource. The third parameter is a sum of maximum transmit power of multiple pieces of beam information of multiple carriers that is configured by the terminal or a sum of maximum transmit power of multiple carriers that is configured by the terminal.

Step 2: For a transmission resource associated with two pieces of beam information, the terminal allocates power based on a priority of the beam information, until total transmission power corresponding to the beam information is less than a fourth parameter. The fourth parameter is maximum transmission power for simultaneous transmission of multiple pieces of beam information on one carrier that is configured by the terminal.

The terminal performs the foregoing two steps until total transmit power is less than or equal to the third parameter.

Optionally, the priority of the beam information may be predefined, for example, a priority of the first piece of beam information is the highest. Optionally, the priority of the beam information may be carried by the beam information.

Optionally, the power control method further includes: sending, by the terminal, first information to the network-side device, where the first information is for determining power headroom.

Optionally, the first information includes at least one of the following:

maximum transmission power corresponding to each piece of beam information;
maximum transmission power for simultaneous transmission of the at least two pieces of beam information;
power headroom corresponding to each piece of beam information; and
power headroom for simultaneous transmission of the at least two pieces of beam information.

The following describes in detail the power control method provided in the embodiments of this application through some embodiments and application scenarios thereof.

Example 1: SDCI space division multiplexing (Space Division Multiplexing, SDM)/frequency division multiplexing (Frequency Division Multiplexing, FDM)/single frequency network (Single Frequency Network, SFN) scheme (considering PUCCH)

Redefine the concept of TO i:

$$P_{PUSCH,b,f,c}(i, j, q_d, l)$$

$$= min\left\{\begin{matrix}P_{CMAX,f,c}(i), \\ P_{O\_PUSCH,b,f,c}(j) + 10\,log_{10}(2^{\mu} \cdot M_{RB,b,f,c}^{PUSCH}(i)) + \alpha_{b,f,c}(j) \cdot PL_{b,f,c}(q_d) + \Delta_{TF,b,f,c}(i) + f_{b,f,c}(i, l)\end{matrix}\right\}$$

PUSCH resource that is associated with one TCI state/panel (which may be, for example, a time-frequency spatial domain resource)
Pcmax per panel/TCI is implemented, and i includes the panel variable.

There is no need to additionally define Pcmax for simultaneous transmission of two panels:
Pcmax may be understood as the definition of per beam or per panel, and the measurement metrics are also for one beam/panel.

Whether transmit power on multiple carrier units (Component Carrier, CC) exceeds Pmax in a carrier aggregation (Carrier Aggregation, CA) scenario is determined for per-panel, whether to drop or not is determined based on per-panel, and only half of the PUSCH may be transmitted under SDM/FDM (the drop behavior of legacy is from per-symbol (per-symbol), and may also result in incomplete transmission of the PUSCH).

It is necessary to additionally define Pcmax for simultaneous transmission of two panels on one CC:
Reuse Pcmax defined by one CC, and Pmax in the CA scenario does not need to be additionally defined.

Pmax in the CA scenario needs to redefine:

a sum of new Pcmax for simultaneous transmission of two panels on each CC;
Pcmax additionally defined based on per-CC, per-f, and per-panel; and
power backoff if a sum of transmit power corresponding to two TCI states exceeds Pcmax: simultaneous backoff or priority-based backoff, for example, Drop one.

Power reduction in the CA scenario:

first CC drop and then intra-CC drop/reduction; and
first intra-CC drop/reduction and then inter-CC drop.

Example 2: Unchanged concept of TO i

Pcmax that supports per-panel

Pcmax requires the introduction of the TCI/panel variable

$$P_{PUSCH} = min \begin{cases} P_{CMAX}(i, p) \\ P_{0(j)} + \alpha(j) \cdot PL(q) + 10 \cdot \log_{10}\left(2^{\mu} \cdot M_{RB}(i)\right) + \Delta_{TF} + \delta(l) \end{cases}$$

P = 0 or 1, p = 0 corresponds to the first TCI of TO i, and p = 1 corresponds to the second TCI of TO i;
Use the index of PL-RS:

$$P_{PUSCH} = min \begin{cases} P_{CMAX}(i, q) \\ P_{0(j)} + \alpha(j) \cdot PL(q) + 10 \cdot \log_{10}\left(2^{\mu} \cdot M_{RB}(i)\right) + \Delta_{TF} + \delta(l) \end{cases}$$

Two panels use the same Pcmax:

$$P_{PUSCH} = min \begin{cases} P_{CMAX}(i) \\ P_{0(j)} + \alpha(j) \cdot PL(q) + 10 \cdot \log_{10}\left(2^{\mu} \cdot M_{RB}(i)\right) + \Delta_{TF} + \delta(l) \end{cases}$$

Obtain transmit power of two panels of one TO through q
P0(j) or $\alpha$(j)
For CG and retransmission of CG, the value is fixed when j = 2, but P0/alpha is not the same for two panels:

Introduce $P_0$(j, por q)$\alpha$(j, por q)
Define j = 2 and 3 of CG
$M_{RB(i)}$
Under FDM, indicate the PRB number of PUSCH corresponding to TCI or PL(q)

There is no need to additionally define Pcmax for simultaneous transmission of two panels:
Pcmax may be understood as the definition of per beam or per panel, and the measurement metrics are also for one beam/panel.
Power reduction in the CA scenario:
calculate total power based on per-panel/TCI, and then drop based on a priority
It is necessary to additionally define Pcmax for simultaneous transmission of two panels on one CC:
define Pcmax defined by one CC; and
Pmax in the CA scenario does not need to be additionally defined.
Newly defined Pcmax:

Pmax in the CA scenario needs to redefine: a sum of new Pcmax for simultaneous transmission of two panels on each CC; and
Pcmax additionally defined based on per-CC, per-f, and per-panel.

Power backoff if a sum of transmit power corresponding to two TCI states exceeds Pcmax: simultaneous backoff or priority-based backoff, for example, Drop one.
Power reduction in the CA scenario:
first CC drop and then intra-CC drop/reduction.

Example 3: MDCI: two PUSCH overlap

No enhancement is required when Pmax for simultaneous transmission of two panels is not defined; and backoff is calculated based on per-TRP in a CA scenario.
Define Pmax for simultaneous transmission of two panels:
Define rules when a power sum of two PUSCHs exceeds Pcmax:

Rule 1: Drop one PUSCH based on a priority, for example, drop the CORESETPoolIndex 1 associated PUSCH.
Rule 2: Transmit two PUSCHs for power backoff.

One of the PUSCHs performs power backoff until total power is within Pcmax;

both two PUSCHs perform backoff;
backoff in equal proportion based on P0;
backoff in equal proportion based on total transmit power; and
first intra-CC and then inter-CC in the CA scenario.

Example 4: When this Pcmax transmit power is exceeded, reduction is performed based on a priority.
In a CA scenario, define the priority based on per scheme:

SDM divides power equally;
the exceeded part is divided into two parts for backoff separately;
FDM prioritizes the first panel;
MDCI PUSCH overlap, the priority defines a priority indicator; and
the panel is distinguished through i or q or j for per-panel power control.

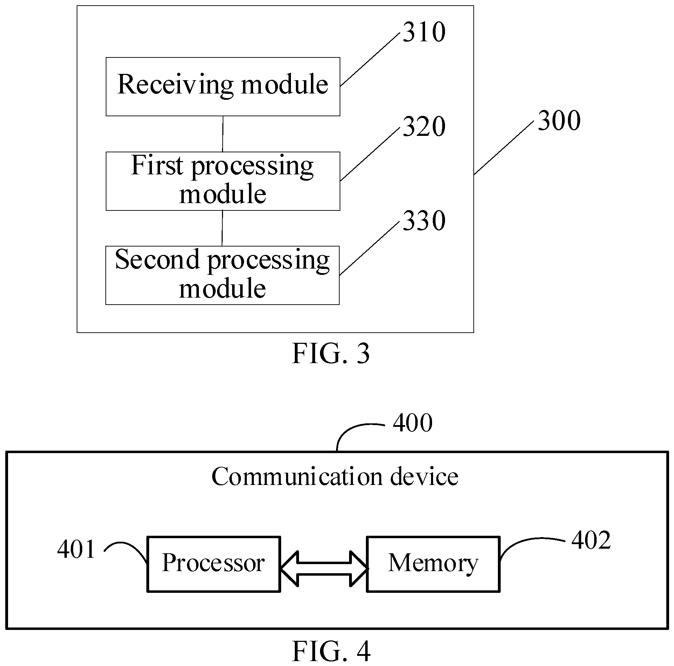

An execution body of the power control method provided in the embodiments of this application may be a power control apparatus. In the embodiments of this application, the power control apparatus provided in the embodiments of this application is described by using an example in which the power control apparatus executes the power control method.
As shown in FIG. 3, an embodiment of this application provides a power control apparatus 300, including:

a receiving module 310, configured to receive first signaling sent by a network-side device;
a first processing module 320, configured to determine at least two pieces of beam information for uplink transmission based on the first signaling; and
a second processing module 330, configured to determine target transmission power of each piece of beam information on a corresponding uplink resource.

Optionally, the first signaling includes at least one of the following information:

downlink control information;
a configured grant;
configuration information for physical uplink control channel;
configuration information for sounding reference signal;
a control resource set pool index; and
an uplink grant.

Optionally, the uplink resource corresponding to the beam information includes at least one of the following:

at least one consecutive orthogonal frequency division multiplex symbol in one slot corresponding to the beam information;

a nominal repetition corresponding to the beam information;

at least one spatial transport stream corresponding to the beam information;

at least one physical resource block corresponding to the beam information, where the at least one physical resource block is determined by at least one of a starting position of a bandwidth part, a starting position of an uplink transmission, and a quantity of consecutive physical resource blocks;

at least one consecutive physical resource block corresponding to the beam information;

a frequency-hopping resource corresponding to the beam information;

at least one subcarrier corresponding to the beam information;

a transmission occasion of an SRS corresponding to the beam information; and

a transmission occasion of a PUCCH corresponding to the beam information.

Optionally, the second processing module 330 includes:

a first processing submodule, configured to determine first transmission power of each piece of beam information on the corresponding uplink resource based on power control parameter information corresponding to each piece of beam information, where the power control parameter information and the beam information are in a one-to-one correspondence; and

a second processing submodule, configured to determine maximum transmission power as the target transmission power, when the first transmission power is greater than the maximum transmission power.

Optionally, the second processing module 330 includes:

a third processing submodule, configured to determine the target transmission power of each piece of beam information on the corresponding uplink resource, based on performing power allocation in priority order of a first object, where the first object includes: at least one of the beam information and a transmission resource;

or

a fourth processing submodule, configured to determine the target transmission power of each piece of beam information on the corresponding uplink resource, based on performing power allocation in priority order of a second object, where the second object includes: at least one of the beam information, a carrier, and the transmission resource.

Optionally, the third processing submodule includes:

a first processing unit, configured to determine first transmission power of each piece of beam information on the corresponding uplink resource based on power control parameter information corresponding to each piece of beam information, where the power control parameter information and the beam information are in a one-to-one correspondence; and

a second processing unit, configured to determine, in a case that the first transmission power is greater than maximum transmission power, the target transmission power of each piece of beam information on the corresponding uplink resource, based on performing power allocation in priority order of the first object.

Optionally, the maximum transmission power is maximum transmission power configured for each piece of beam information of a terminal;

or

the maximum transmission power is determined based on a first parameter, and a sum of maximum transmission power corresponding to the at least two pieces of beam information is less than or equal to the first parameter, where the first parameter is one of the following:

maximum output power configured for each cell;

a sum of maximum output power of the at least two pieces of beam information configured for each cell; and

maximum output power configured for simultaneous transmission of the at least two pieces of beam information of each cell.

Optionally, the second processing unit includes:

a first processing subunit, configured to determine, in a case that the first transmission power is greater than the maximum transmission power, the target transmission power of each piece of beam information on the corresponding uplink resource, based on performing power allocation in priority order of the transmission resource.

Optionally, the third processing submodule includes:

a third processing unit, configured to determine first transmission power of each piece of beam information on the corresponding uplink resource based on power control parameter information corresponding to each piece of beam information, where the power control parameter information and the beam information are in a one-to-one correspondence; and

a fourth processing unit, configured to determine, in a case that a sum of first transmission power of the at least two pieces of beam information is greater than a second parameter, the target transmission power of each piece of beam information on the corresponding uplink resource, based on performing power allocation in priority order of the first object.

Optionally, the second parameter is one of the following:

maximum output power configured for each cell;

a sum of maximum output power of the at least two pieces of beam information configured for each cell; and

maximum output power configured for simultaneous transmission of the at least two pieces of beam information of each cell.

Optionally, the fourth processing submodule includes:

a fifth processing unit, configured to determine first transmission power of each piece of beam information on the corresponding uplink resource based on power control parameter information corresponding to each piece of beam information, where the power control parameter information and the beam information are in a one-to-one correspondence; and

a sixth processing unit, configured to determine, in a case that the first transmission power is greater than a third parameter, the target transmission power of each piece of beam information on the corresponding uplink resource, based on performing power allocation in priority order of the second object.

Optionally, the third parameter includes at least one of the following:

a sum of maximum transmission power of one piece of beam information on a plurality of carriers that is configured by a terminal; and

a sum of maximum transmission power of the at least two pieces of beam information on one carrier that is configured by the terminal.

Optionally, the third parameter is determined based on one of the following:

an uplink grant associated with each piece of beam information in a plurality of carriers in a carrier aggregation scenario; and

an uplink grant of the plurality of carriers.

Optionally, the sixth processing unit includes:
a second processing subunit, configured to determine, in a case that the first transmission power is greater than the third parameter, the target transmission power of each piece of beam information on the corresponding uplink resource, based on performing power allocation in priority order of at least one of the carrier and the transmission resource.

Optionally, the fourth processing submodule includes:

a seventh processing unit, configured to determine first transmission power of each piece of beam information on the corresponding uplink resource based on power control parameter information corresponding to each piece of beam information, where the power control parameter information and the beam information are in a one-to-one correspondence; and

an eighth processing unit, configured to determine, in a case that a sum of first transmission power of the at least two pieces of beam information is greater than a fourth parameter, the target transmission power of each piece of beam information on the corresponding uplink resource, based on performing power allocation in priority order of the second object.

Optionally, the fourth parameter is one of the following:

a sum of maximum transmission power of a plurality of carriers in a carrier aggregation scenario that is configured by the terminal;

a sum of maximum transmission power of the at least two pieces of beam information on the plurality of carriers that is configured by the terminal; and

maximum output power configured by the terminal for simultaneous transmission of the at least two pieces of beam information on the plurality of carriers.

Optionally, the power control apparatus 300 further includes:
a sending module, configured to send first information to the network-side device, where the first information is for determining power headroom.

Optionally, the first information includes at least one of the following:

maximum transmission power corresponding to each piece of beam information;

maximum transmission power for simultaneous transmission of the at least two pieces of beam information;

power headroom corresponding to each piece of beam information; and

power headroom for simultaneous transmission of the at least two pieces of beam information.

By using the power control apparatus 300 in the embodiments of this application, the first signaling sent by the network-side device is received through a receive terminal, and the at least two pieces of beam information for uplink transmission is determined based on the first signaling. When there are at least two pieces of beam information for uplink transmission, target transmission power of each piece of beam information on a corresponding uplink resource can be determined, so that the current problem of no corresponding power control scheme for uplink transmission to support simultaneous transmission of multiple pieces of beam information can be resolved.

The power control apparatus in the embodiments of this application may be an electronic device, for example, an electronic device with an operating system, or may be a component in an electronic device, for example, an integrated circuit or chip. The electronic device may be a terminal or may be another device other than the terminal. For example, the terminal may include, but is not limited to, the listed types of the terminal 11, and the another device may be a server, a network attached storage (Network Attached Storage, NAS), or the like. This is not specifically limited in the embodiments of this application.

The power control apparatus provided in the embodiments of this application can implement the processes implemented in the method embodiment of FIG. 2, and achieve the same technical effects. To avoid repetition, details are not described herein again.

Optionally, as shown in FIG. 4, an embodiment of this application further provides a communication device 400, including a processor 401 and a memory 402. The memory 402 stores a program or instructions capable of being run on the processor 401. For example, when the communication device 400 is a terminal, the program or instructions are executed by the processor 401 to implement steps of the embodiments of the power control method, and the same technical effects can be achieved.

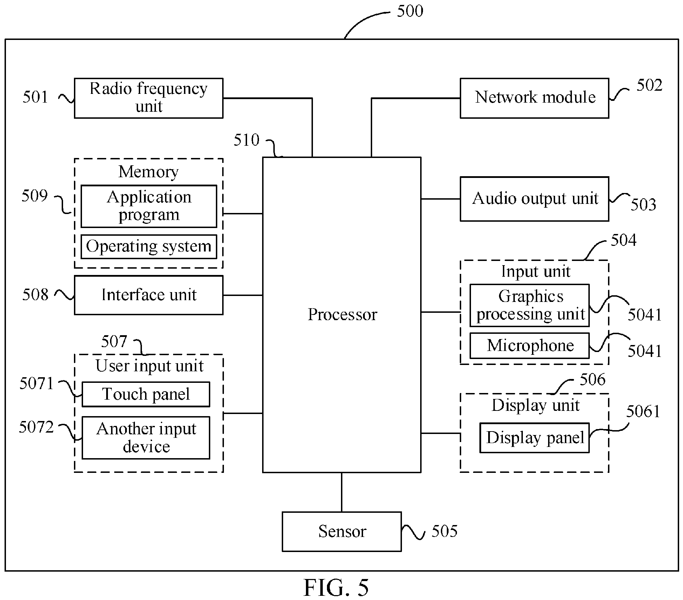

An embodiment of this application further provides a terminal, including a processor and a communication interface. The communication interface is configured to receive first signaling sent by a network-side device. The processor is configured to determine at least two pieces of beam information for uplink transmission based on the first signaling; and determine target transmission power of each piece of beam information on a corresponding uplink resource. This terminal embodiment corresponds to the foregoing method embodiment on the terminal side. The implementation processes and implementations of the method embodiment may be applied in this terminal embodiment, and can achieve the same technical effects. Specifically, FIG. 5 is a schematic diagram of a hardware structure of a terminal according to an embodiment of this application.

The terminal 500 includes, but is not limited to: at least some of components such as a radio frequency unit 501, a network module 502, an audio output unit 503, an input unit 504, a sensor 505, a display unit 506, a user input unit 507, an interface unit 508, a memory 509, and a processor 510.

A person skilled in the art may understand that the terminal 500 may further include a power supply (for example, a battery) for supplying power to the components. The power supply may be logically connected to the processor 510 through a power management system, to implement functions such as charging, discharging, and power consumption management through the power management system. The terminal structure shown in FIG. 5 does not constitute a limitation on the terminal, and the terminal may include more or fewer components shown in the figure, or combine some components, or have different component arrangements. Details are not described herein again.

It should be understood that, in the embodiments of this application, the input unit 504 may include a graphics processing unit (Graphics Processing Unit, GPU) 5041 and a microphone 5042, and the graphics processing unit 5041 processes image data of still images or videos obtained by an image capture apparatus (for example, a camera) in a video capture mode or an image capture mode. The display unit 506 may include a display panel 5061, and the display panel 5061 may be configured in the form of a liquid crystal display, an organic light-emitting diode, or the like. The user input unit 507 includes at least one of a touch panel 5071 and another input device 5072. The touch panel 5071 is also referred to as a touchscreen. The touch panel 5071 may include two parts: a touch detection apparatus and a touch controller. The another input device 5072 may include, but is not limited to, a physical keyboard, a function key (such as a volume control key or a switch key), a track ball, a mouse, and a joystick. Details are not described herein again.

In the embodiments of this application, the radio frequency unit 501 receives downlink data from a network-side device, and then transmits downlink data to the processor 510 for processing. In addition, the radio frequency unit 501 may send uplink data to the network-side device. Usually, the radio frequency unit 501 includes, but is not limited to, an antenna, an amplifier, a transceiver, a coupler, a low noise amplifier, a duplexer, and the like.

The memory 509 may be configured to store a software program or instructions and various data. The memory 509 may mainly include a first storage area storing a program or instructions and a second storage area storing data. The first storage area may store an operating system, an application program or instructions required by at least one function (such as a sound playing function and an image displaying function), and the like. In addition, the memory 509 may include a volatile memory or a non-volatile memory, or the memory 509 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 509 in the embodiments of this application includes, but is not limited to, these memories and any other suitable types of memories.

The processor 510 may include one or more processing units. Optionally, the processor 510 may integrate an application processor and a modem processor. The application processor mainly processes an operating system, a user interface, an application program, and other operations. The modem processor mainly processes a wireless communication signal, for example, a baseband processor. It may be understood that the modem processor may not be integrated into the processor 510.

The radio frequency unit 501 is configured to: receive first signaling sent by a network-side device.

The processor 510 is configured to:

determine at least two pieces of beam information for uplink transmission based on the first signaling; and
determine target transmission power of each piece of beam information on a corresponding uplink resource.

Optionally, the first signaling includes at least one of the following information:

downlink control information;
a configured grant;
configuration information for physical uplink control channel;
configuration information for sounding reference signal;
a control resource set pool index; and
an uplink grant.

Optionally, the uplink resource corresponding to the beam information includes at least one of the following:

at least one consecutive orthogonal frequency division multiplex symbol in one slot corresponding to the beam information;
a nominal repetition corresponding to the beam information;
at least one spatial transport stream corresponding to the beam information;
at least one physical resource block corresponding to the beam information, where the at least one physical resource block is determined by at least one of a starting position of a bandwidth part, a starting position of an uplink transmission, and a quantity of consecutive physical resource blocks;
at least one consecutive physical resource block corresponding to the beam information;
a frequency-hopping resource corresponding to the beam information;
at least one subcarrier corresponding to the beam information;
a transmission occasion of an SRS corresponding to the beam information; and
a transmission occasion of a PUCCH corresponding to the beam information.

Optionally, the processor 510 is configured to:

determine first transmission power of each piece of beam information on the corresponding uplink resource based on power control parameter information corresponding to each piece of beam information, where the power control parameter information and the beam information are in a one-to-one correspondence; and
determine maximum transmission power as the target transmission power, when the first transmission power is greater than the maximum transmission power.

Optionally, the processor 510 is configured to:

determine the target transmission power of each piece of beam information on the corresponding uplink resource, based on performing power allocation in priority order of a first object, where the first object includes: at least one of the beam information and a transmission resource;
or
determine the target transmission power of each piece of beam information on the corresponding uplink resource, based on performing power allocation in priority order of a second object, where the second object includes: at least one of the beam information, a carrier, and the transmission resource.

Optionally, the processor 510 is configured to:

determine first transmission power of each piece of beam information on the corresponding uplink resource based on power control parameter information corresponding to each piece of beam information, where the power control parameter information and the beam information are in a one-to-one correspondence; and
determine, in a case that the first transmission power is greater than maximum transmission power, the target transmission power of each piece of beam information on the corresponding uplink resource, based on performing power allocation in priority order of the first object.

Optionally, the maximum transmission power is maximum transmission power configured by the terminal for each piece of beam information;
or

the maximum transmission power is determined based on a first parameter, and a sum of maximum transmission power corresponding to the at least two pieces of beam information is less than or equal to the first parameter, where the first parameter is one of the following:

maximum output power configured for each cell;
a sum of maximum output power of the at least two pieces of beam information configured for each cell; and
maximum output power configured for simultaneous transmission of the at least two pieces of beam information of each cell.

Optionally, the processor 510 is configured to:
determine, in a case that the first transmission power is greater than the maximum transmission power, the target transmission power of each piece of beam information on the corresponding uplink resource, based on performing power allocation in priority order of the transmission resource.

Optionally, the processor 510 is configured to:

determine first transmission power of each piece of beam information on the corresponding uplink resource based on power control parameter information corresponding to each piece of beam information, where the power control parameter information and the beam information are in a one-to-one correspondence; and
determine, in a case that a sum of first transmission power of the at least two pieces of beam information is greater than a second parameter, the target transmission power of each piece of beam information on the corresponding uplink resource, based on performing power allocation in priority order of the first object.

Optionally, the second parameter is one of the following:

maximum output power configured for each cell;
a sum of maximum output power of the at least two pieces of beam information configured for each cell; and
maximum output power configured for simultaneous transmission of the at least two pieces of beam information of each cell.

Optionally, the processor 510 is configured to:

determine first transmission power of each piece of beam information on the corresponding uplink resource based on power control parameter information corresponding to each piece of beam information, where the power control parameter information and the beam information are in a one-to-one correspondence; and
determine, by the terminal in a case that the first transmission power is greater than a third parameter, the target transmission power of each piece of beam information on the corresponding uplink resource, based on performing power allocation in priority order of the second object.

Optionally, the third parameter includes at least one of the following:

a sum of maximum transmission power of one piece of beam information on a plurality of carriers that is configured by the terminal; and
a sum of maximum transmission power of the at least two pieces of beam information on one carrier that is configured by the terminal.

Optionally, the third parameter is determined based on one of the following:

an uplink grant associated with each piece of beam information in a plurality of carriers in a carrier aggregation scenario; and
an uplink grant of the plurality of carriers.

Optionally, the processor 510 is configured to:
determine, in a case that the first transmission power is greater than the third parameter, the target transmission power of each piece of beam information on the corresponding uplink resource, based on performing power allocation in priority order of at least one of the carrier and the transmission resource.
Optionally, the processor 510 is configured to:

determine first transmission power of each piece of beam information on the corresponding uplink resource based on power control parameter information corresponding to each piece of beam information, where the power control parameter information and the beam information are in a one-to-one correspondence; and
determine, in a case that a sum of first transmission power of the at least two pieces of beam information is greater than a fourth parameter, the target transmission power of each piece of beam information on the corresponding uplink resource, based on performing power allocation in priority order of the second object.

Optionally, the fourth parameter is one of the following:

a sum of maximum transmission power of a plurality of carriers in a carrier aggregation scenario that is configured by the terminal;
a sum of maximum transmission power of the at least two pieces of beam information on the plurality of carriers that is configured by the terminal; and
maximum output power configured by the terminal for simultaneous transmission of the at least two pieces of beam information on the plurality of carriers.

Optionally, the radio frequency unit 501 is configured to: send first information to the network-side device, where the first information is for determining power headroom.
Optionally, the first information includes at least one of the following:

maximum transmission power corresponding to each piece of beam information;
maximum transmission power for simultaneous transmission of the at least two pieces of beam information;
power headroom corresponding to each piece of beam information; and
power headroom for simultaneous transmission of the at least two pieces of beam information.

By using the terminal in the embodiments of this application,
the first signaling sent by the network-side device is received through a receive terminal, and the at least two pieces of beam information for uplink transmission is determined based on the first signaling. When there are at least two pieces of beam information for uplink transmission, target transmission power of each piece of beam information on a corresponding uplink resource can be determined, so that the current problem of no corresponding power control scheme for uplink transmission to support simultaneous transmission of multiple pieces of beam information can be resolved.

An embodiment of this application further provides a readable storage medium. The readable storage medium stores a program or instructions. The program or instructions are executed by a processor to implement the processes of the embodiments of the power control method, and the same technical effects can be achieved. To avoid repetition, details are not described herein again.

The processor is the processor in the terminal in the foregoing embodiment. The readable storage medium includes a computer-readable storage medium, such as a computer read-only memory ROM, a random access memory RAM, a magnetic disk, or an optical disc.

An embodiment of this application provides a chip. The chip includes a processor and a communication interface. The communication interface is coupled to the processor. The processor is configured to run a program or instructions to implement the processes of the embodiments of the power control method, and the same technical effects can be achieved. To avoid repetition, details are not described herein again.

It should be understood that the chip provided in this embodiment of this application may also be referred to as a system-level chip, a system chip, a chip system, or a system on chip.

An embodiment of this application provides a computer program/program product. The computer program/program product is stored in a storage medium. The computer program/program product is executed by at least one processor to implement the processes of the embodiments of the power control method, and the same technical effects can be achieved. To avoid repetition, details are not described herein again.

It needs to be noted that, in this specification, the term "include", "comprise", or any other variant thereof is intended to cover a non-exclusive inclusion, so that a process, a method, an object, or an apparatus that includes a series of elements not only includes such elements, but also includes other elements not expressly listed, or further includes elements inherent to such process, method, object, or apparatus. If no more limitations are made, an element limited by "include a/an..." does not exclude other same elements existing in the process, method, object, or apparatus that includes the element. In addition, it needs to be noted that the scope of the method and apparatus in the implementations of this application is limited to performing functions in the shown or discussed order, and may further include performing functions in a substantially simultaneous manner or in reverse order based on the involved functions. For example, the described method may be performed in an order different from the described order, and various steps may be added, omitted, or combined. In addition, the features described in some examples may be combined in other examples.

According to the descriptions in the foregoing implementations, a person skilled in the art may clearly learn that the method according to the foregoing embodiments may be implemented by software with a necessary general-purpose hardware platform, or certainly by hardware, but the former is the preferred implementation in many cases. Based on such an understanding, the technical solutions of this application essentially or the part contributing to the related art may be presented in the form of a computer software product. The computer software product is stored in a storage medium (such as a ROM/RAM, a magnetic disk, or an optical disc), including several instructions to enable a terminal (which may be a mobile phone, a computer, a server, an air-conditioner, a network device, or the like) to perform the methods in the embodiments of this application.

The embodiments of this application are described above with reference to the accompanying drawings, but this application is not limited to the foregoing specific implementations. The foregoing specific implementations are merely examples rather than limitations. Under the inspiration of this application, a person of ordinary skill in the art may also make many forms without departing from the purpose of this application and the protection scope of the claims, which are all within the protection scope of this application.

**Claims**

1. A power control method, comprising:

   receiving, by a terminal, first signaling sent by a network-side device;
   determining, by the terminal, at least two pieces of beam information for uplink transmission based on the first signaling; and
   determining, by the terminal, target transmission power of each piece of beam information on a corresponding uplink resource.

2. The power control method according to claim 1, wherein the first signaling comprises at least one of the following information:

downlink control information;
a configured grant;
configuration information for physical uplink control channel;
configuration information for sounding reference signal;
a control resource set pool index; and
an uplink grant.

3. The power control method according to claim 1, wherein the uplink resource comprises at least one of the following:

at least one consecutive orthogonal frequency division multiplex symbol in one slot corresponding to the beam information;
a nominal repetition corresponding to the beam information;
at least one spatial transport stream corresponding to the beam information;
at least one physical resource block corresponding to the beam information, wherein the at least one physical resource block is determined by at least one of a starting position of a bandwidth part, a starting position of an uplink transmission, and a quantity of consecutive physical resource blocks;
at least one consecutive physical resource block corresponding to the beam information;
a frequency-hopping resource corresponding to the beam information;
at least one subcarrier corresponding to the beam information;
a transmission occasion of a sounding reference signal corresponding to the beam information; and
a transmission occasion of a physical uplink control channel corresponding to the beam information.

4. The power control method according to claim 1, wherein the determining, by the terminal, target transmission power of each piece of beam information on a corresponding uplink resource comprises:

determining, by the terminal, first transmission power of each piece of beam information on the corresponding uplink resource based on power control parameter information corresponding to each piece of beam information, wherein the power control parameter information and the beam information are in a one-to-one correspondence; and
determining maximum transmission power as the target transmission power, when the first transmission power is greater than the maximum transmission power.

5. The power control method according to claim 1, wherein the determining, by the terminal, target transmission power of each piece of beam information on a corresponding uplink resource comprises:

determining, by the terminal, the target transmission power of each piece of beam information on the corresponding uplink resource, based on performing power allocation in priority order of a first object, wherein the first object comprises: at least one of the beam information and a transmission resource;
or
determining, by the terminal, the target transmission power of each piece of beam information on the corresponding uplink resource, based on performing power allocation in priority order of a second object wherein the second object comprises: at least one of the beam information, a carrier, and the transmission resource.

6. The power control method according to claim 5, wherein the determining, by the terminal, the target transmission power of each piece of beam information on the corresponding uplink resource, based on performing power allocation in priority order of a first object comprises:

determining, by the terminal, first transmission power of each piece of beam information on the corresponding uplink resource based on power control parameter information corresponding to each piece of beam information, wherein the power control parameter information and the beam information are in a one-to-one correspondence; and
determining, by the terminal in a case that the first transmission power is greater than maximum transmission power, the target transmission power of each piece of beam information on the corresponding uplink resource, based on performing power allocation in priority order of the first object.

7. The power control method according to claim 4 or 6, wherein

the maximum transmission power is maximum transmission power configured for each piece of beam information of the terminal;
or
the maximum transmission power is determined based on a first parameter, and a sum of maximum transmission power corresponding to the at least two pieces of beam information is less than or equal to the first parameter, wherein
the first parameter is one of the following:

maximum output power configured for each cell;
a sum of maximum output power of the at least two pieces of beam information configured for each cell; and
maximum output power configured for simultaneous transmission of the at least two pieces of beam information of each cell.

8. The power control method according to claim 6, wherein the determining, by the terminal in a case that the first transmission power is greater than maximum transmission power, the target transmission power of each piece of beam information on the corresponding uplink resource, based on performing power allocation in priority order of the first object comprises:
determining, by the terminal in a case that the first transmission power is greater than the maximum transmission power, the target transmission power of each piece of beam information on the corresponding uplink resource based on performing power allocation in priority order of the first object.

9. The power control method according to claim 5 or 6, wherein the determining, by the terminal, the target transmission power of each piece of beam information on the corresponding uplink resource, based on performing power allocation in priority order of a first object comprises:

determining, by the terminal, first transmission power of each piece of beam information on the corresponding uplink resource based on power control parameter information corresponding to each piece of beam information, wherein the power control parameter information and the beam information are in a one-to-one correspondence; and
determining, by the terminal in a case that a sum of first transmission power of the at least two pieces of beam information is greater than a second parameter, the target transmission power of each piece of beam information on the corresponding uplink resource, based on performing power allocation in priority order of the first object.

10. The power control method according to claim 9, wherein the second parameter is one of the following:

maximum output power configured for each cell;
a sum of maximum output power of the at least two pieces of beam information configured for each cell; and
maximum output power configured for simultaneous transmission of the at least two pieces of beam information of each cell.

11. The power control method according to claim 5, wherein the determining, by the terminal, the target transmission power of each piece of beam information on the corresponding uplink resource, based on performing power allocation in priority order of a second object comprises:

determining, by the terminal, first transmission power of each piece of beam information on the corresponding uplink resource based on power control parameter information corresponding to each piece of beam information, wherein the power control parameter information and the beam information are in a one-to-one correspondence; and
determining, by the terminal in a case that the first transmission power is greater than a third parameter, the target transmission power of each piece of beam information on the corresponding uplink resource, based on performing power allocation in priority order of the second object.

12. The power control method according to claim 11, wherein the third parameter comprises at least one of the following:

a sum of maximum transmission power of one piece of beam information on a plurality of carriers that is configured by the terminal; and
a sum of maximum transmission power of the at least two pieces of beam information on one carrier that is configured by the terminal.

13. The power control method according to claim 12, wherein the third parameter is determined based on one of the following:

an uplink grant associated with each piece of beam information in a plurality of carriers in a carrier aggregation scenario; and
an uplink grant of the plurality of carriers.

14. The power control method according to claim 11, wherein the determining, by the terminal in a case that the first transmission power is greater than a third parameter, the target transmission power of each piece of beam information on the corresponding uplink resource, based on performing power allocation in priority order of the second object comprises:
determining, by the terminal in a case that the first transmission power is greater than the third parameter, the target transmission power of each piece of beam information on the corresponding uplink resource, based on performing power allocation in priority order of at least one of the carrier and the transmission resource.

15. The power control method according to claim 5 or 11, wherein the determining, by the terminal, the target transmission power of each piece of beam information on the corresponding uplink resource, based on performing power allocation in priority order of a second object comprises:

determining, by the terminal, first transmission power of each piece of beam information on the corresponding uplink resource based on power control parameter information corresponding to each piece of beam information, wherein the power control parameter information and the beam information are in a one-to-one correspondence; and
determining, by the terminal in a case that a sum of first transmission power of the at least two pieces of beam information is greater than a fourth parameter, the target transmission power of each piece of beam information on the corresponding uplink resource, based on performing power allocation in priority order of the second object.

16. The power control method according to claim 15, wherein the fourth parameter is one of the following:

a sum of maximum transmission power of a plurality of carriers in a carrier aggregation scenario that is configured by the terminal;
a sum of maximum transmission power of the at least two pieces of beam information on the plurality of carriers that is configured by the terminal; and
maximum output power configured by the terminal for simultaneous transmission of the at least two pieces of beam information on the plurality of carriers.

17. The power control method according to claim 1, further comprising:
sending, by the terminal, first information to the network-side device, wherein the first information is for determining power headroom.

18. The power control method according to claim 17, wherein the first information comprises at least one of the following:

maximum transmission power corresponding to each piece of beam information;
maximum transmission power for simultaneous transmission of the at least two pieces of beam information;
power headroom corresponding to each piece of beam information; and
power headroom for simultaneous transmission of the at least two pieces of beam information.

19. A power control apparatus, comprising:

a receiving module, configured to receive first signaling sent by a network-side device;
a first processing module, configured to determine at least two pieces of beam information for uplink transmission based on the first signaling; and
a second processing module, configured to determine target transmission power of each piece of beam information on a corresponding uplink resource.

20. The power control apparatus according to claim 19, wherein the second processing module comprises:

a first processing submodule, configured to determine first transmission power of each piece of beam information on the corresponding uplink resource based on power control parameter information corresponding to each piece of beam information, wherein the power control parameter information and the beam information are in a one-to-one correspondence; and

a second processing submodule, configured to determine maximum transmission power as the target transmission power, when the first transmission power is greater than the maximum transmission power.

21. The power control apparatus according to claim 19, wherein the second processing module comprises:

a third processing submodule, configured to determine the target transmission power of each piece of beam information on the corresponding uplink resource, based on performing power allocation in priority order of a first object, wherein the first object comprises: at least one of the beam information and a transmission resource; or

a fourth processing submodule, configured to determine the target transmission power of each piece of beam information on the corresponding uplink resource, based on performing power allocation in priority order of a second object, wherein the second object comprises: at least one of the beam information, a carrier, and the transmission resource.

22. The power control apparatus according to claim 21, wherein the third processing submodule comprises:

a first processing unit, configured to determine first transmission power of each piece of beam information on the uplink resource corresponding to the beam information based on power control parameter information corresponding to each piece of beam information, wherein the power control parameter information and the beam information are in a one-to-one correspondence; and

a second processing unit, configured to determine, in a case that the first transmission power is greater than maximum transmission power, the target transmission power of each piece of beam information on the corresponding uplink resource, based on performing power allocation in priority order of the first object.

23. The power control apparatus according to claim 20 or 22, wherein

the maximum transmission power is maximum transmission power configured for each piece of beam information of a terminal;
or
the maximum transmission power is determined based on a first parameter, and a sum of maximum transmission power corresponding to the at least two pieces of beam information is less than or equal to the first parameter, wherein
the first parameter is one of the following:

maximum output power configured for each cell;
a sum of maximum output power of the at least two pieces of beam information configured for each cell; and
maximum output power configured for simultaneous transmission of the at least two pieces of beam information of each cell.

24. The power control apparatus according to claim 22, wherein the second processing unit comprises:
a first processing subunit, configured to determine, in a case that the first transmission power is greater than the maximum transmission power, the target transmission power of each piece of beam information on the corresponding uplink resource, based on performing power allocation in priority order of the transmission resource.

25. The power control apparatus according to claim 21 or 22, wherein the third processing submodule comprises:

a third processing unit, configured to determine first transmission power of each piece of beam information on the corresponding uplink resource based on power control parameter information corresponding to each piece of beam information, wherein the power control parameter information and the beam information are in a one-to-one correspondence; and

a fourth processing unit, configured to determine, in a case that a sum of first transmission power of the at least two pieces of beam information is greater than a second parameter, the target transmission power of each piece of beam information on the corresponding uplink resource, based on performing power allocation in priority order of the first object.

26. The power control apparatus according to claim 25, wherein the second parameter is one of the following:

maximum output power configured for each cell;
a sum of maximum output power of the at least two pieces of beam information configured for each cell; and
maximum output power configured for simultaneous transmission of the at least two pieces of beam information of each cell.

27. The power control apparatus according to claim 21, wherein the fourth processing submodule comprises:

a fifth processing unit, configured to determine first transmission power of each piece of beam information on the corresponding uplink resource based on power control parameter information corresponding to each piece of beam information, wherein the power control parameter information and the beam information are in a one-to-one correspondence; and
a sixth processing unit, configured to determine, in a case that the first transmission power is greater than a third parameter, the target transmission power of each piece of beam information on the corresponding uplink resource, based on performing power allocation in priority order of the second object.

28. The power control apparatus according to claim 27, wherein the third parameter comprises at least one of the following:

a sum of maximum transmission power of one piece of beam information on a plurality of carriers that is configured by a terminal; and
a sum of maximum transmission power of the at least two pieces of beam information on one carrier that is configured by the terminal.

29. The power control apparatus according to claim 28, wherein the third parameter is determined based on one of the following:

an uplink grant associated with each piece of beam information in a plurality of carriers in a carrier aggregation scenario; and
an uplink grant of the plurality of carriers.

30. The power control apparatus according to claim 27, wherein the sixth processing unit comprises:
a second processing subunit, configured to determine, in a case that the first transmission power is greater than the third parameter, the target transmission power of each piece of beam information on the corresponding uplink resource, based on performing power allocation in priority order of at least one of the carrier and the transmission resource.

31. The power control apparatus according to claim 21 or 27, wherein the fourth processing submodule comprises:

a seventh processing unit, configured to determine first transmission power of each piece of beam information on the corresponding uplink resource based on power control parameter information corresponding to each piece of beam information, wherein the power control parameter information and the beam information are in a one-to-one correspondence; and
an eighth processing unit, configured to determine, in a case that a sum of first transmission power of the at least two pieces of beam information is greater than a fourth parameter, the target transmission power of each piece of beam information on the corresponding uplink resource, based on performing power allocation in priority order of the second object.

32. The power control apparatus according to claim 31, wherein the fourth parameter is one of the following:

a sum of maximum transmission power of a plurality of carriers in a carrier aggregation scenario that is configured by a terminal;
a sum of maximum transmission power of the at least two pieces of beam information on the plurality of carriers that is configured by the terminal; and
maximum output power configured by the terminal for simultaneous transmission of the at least two pieces of beam information on the plurality of carriers.

33. The power control apparatus according to claim 19, further comprising:
a sending module, configured to send first information to the network-side device, wherein the first information is for determining power headroom.

34. The power control apparatus according to claim 33, wherein the first information comprises at least one of the following:

maximum transmission power corresponding to each piece of beam information;
maximum transmission power for simultaneous transmission of the at least two pieces of beam information;
power headroom corresponding to each piece of beam information; and
power headroom for simultaneous transmission of the at least two pieces of beam information.

35. A terminal, comprising a processor and a memory, the memory storing a program or instructions capable of being run on the processor, wherein the program or instructions are executed by the processor to implement steps of the power control method according to any one of claims 1 to 18.

36. A readable storage medium, the readable storage medium storing a program or instructions, wherein the program or instructions are executed by a processor to implement steps of the power control method according to any one of claims 1 to 19.

Network-side
device

11

11

Terminal

Terminal

FIG. 1

| A terminal receives first signaling sent by a network-side device | 21 |

| The terminal determines at least two pieces of beam information for uplink transmission based on the first signaling | 22 |

| The terminal determines target transmission power of each piece of beam information on a corresponding uplink resource | 23 |

FIG. 2

Receiving module 310

First processing module 320

Second processing module 330

300

FIG. 3

400

Communication device

401 Processor ⟷ Memory 402

FIG. 4

500

| | | |
|---|---|---|
| 501 — Radio frequency unit | 510 — | Network module — 502 |

Memory
509 — Application program
Operating system

Audio output unit — 503

504
Input unit
Graphics processing unit — 5041
Microphone — 5041

508 — Interface unit

Processor

507 —
User input unit
5071 — Touch panel
5072 — Another input device

506
Display unit — 5061
Display panel

Sensor — 505

FIG. 5

<div align="center">

## INTERNATIONAL SEARCH REPORT

</div>

| | International application No. |
|---|---|
| | **PCT/CN2023/083351** |

**A. CLASSIFICATION OF SUBJECT MATTER**

H04W 52/14(2009.01)i

According to International Patent Classification (IPC) or to both national classification and IPC

**B. FIELDS SEARCHED**

Minimum documentation searched (classification system followed by classification symbols)

ICC:H04W,H04B,H04L

Documentation searched other than minimum documentation to the extent that such documents are included in the fields searched

Electronic data base consulted during the international search (name of data base and, where practicable, search terms used)

3GPP, CNTXT, ENTXTC, WPABSC: 波束, 多波束, 功率, 功率控制, 控制, 优先级, beam, panel, power, wave, multi-beam, priority

**C. DOCUMENTS CONSIDERED TO BE RELEVANT**

| Category* | Citation of document, with indication, where appropriate, of the relevant passages | Relevant to claim No. |
|---|---|---|
| X | CN 112913287 A (ZTE CORP.) 04 June 2021 (2021-06-04) claims 2-25, and description, paragraphs 0055-0069 | 1-4, 17, 19, 20, 33, 35-36 |
| A | CN 109089279 A (VIVO COMMUNICATION TECHNOLOGY CO., LTD.) 25 December 2018 (2018-12-25) entire document | 1-36 |
| A | CN 109151967 A (VIVO COMMUNICATION TECHNOLOGY CO., LTD.) 04 January 2019 (2019-01-04) entire document | 1-36 |
| A | CN 110167126 A (TELECOMMUNICATIONS TECHNOLOGY RESEARCH INSTITUTE CO., LTD.) 23 August 2019 (2019-08-23) entire document | 1-36 |
| A | CN 110521247 A (TELECOMMUNICATIONS TECHNOLOGY RESEARCH INSTITUTE CO., LTD.) 29 November 2019 (2019-11-29) entire document | 1-36 |

☑ Further documents are listed in the continuation of Box C.   ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **24 May 2023** | **25 May 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT | International application No. |
|---|---|
| | **PCT/CN2023/083351** |

**C.    DOCUMENTS CONSIDERED TO BE RELEVANT**

| Category* | Citation of document, with indication, where appropriate, of the relevant passages | Relevant to claim No. |
|---|---|---|
| A | KR 20180136858 A (SAMSUNG ELECTRONICS CO., LTD.) 26 December 2018 (2018-12-26)<br>        entire document | 1-36 |
| A | SHARP. "R1-1708368 "Power ramping procedure for multi-beam case""<br>*3GPP tsg_ran\WG1_RL1*, No. TSGR1_89, 06 May 2017 (2017-05-06),<br>        entire document | 1-36 |

Form PCT/ISA/210 (second sheet) (July 2022)

INTERNATIONAL SEARCH REPORT
Information on patent family members

International application No.

**PCT/CN2023/083351**

| Patent document cited in search report | | | Publication date (day/month/year) | Patent family member(s) | | | Publication date (day/month/year) |
|---|---|---|---|---|---|---|---|
| CN | 112913287 | A | 04 June 2021 | None | | | |
| CN | 109089279 | A | 25 December 2018 | WO | 2018228370 | A1 | 20 December 2018 |
| CN | 109151967 | A | 04 January 2019 | WO | 2018228472 | A1 | 20 December 2018 |
| CN | 110167126 | A | 23 August 2019 | WO | 2019157895 | A1 | 22 August 2019 |
| CN | 110521247 | A | 29 November 2019 | JP | 2020519187 | A | 25 June 2020 |
| | | | | JP | 7030845 | B2 | 07 March 2022 |
| | | | | EP | 3619976 | A1 | 11 March 2020 |
| | | | | EP | 3619976 | A4 | 29 April 2020 |
| | | | | EP | 3619976 | B1 | 03 May 2023 |
| | | | | KR | 20200003901 | A | 10 January 2020 |
| | | | | KR | 102236092 | B1 | 02 April 2021 |
| | | | | WO | 2018201818 | A1 | 08 November 2018 |
| | | | | US | 2018324708 | A1 | 08 November 2018 |
| | | | | US | 10341961 | B2 | 02 July 2019 |
| KR | 20180136858 | A | 26 December 2018 | US | 2020205093 | A1 | 25 June 2020 |
| | | | | US | 11147029 | B2 | 12 October 2021 |
| | | | | KR | 102379822 | B1 | 30 March 2022 |
| | | | | EP | 3624505 | A1 | 18 March 2020 |
| | | | | EP | 3624505 | A4 | 27 January 2021 |

Form PCT/ISA/210 (patent family annex) (July 2022)

# EP 4 503 767 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210307017